# EUROPEAN PATENT APPLICATION

(11) **EP 4 741 053 A1**
(43) Date of publication of application: **13.05.2026**
(21) Application number: 24852339.1
(22) Date of filing: 07.08.2024
(51) Int. Cl.: B01J 27/185, B01J 37/04, B01J 37/08, B01J 37/06, B01J 35/61, C25B 1/04, C25B 11/091

(54) **NICKEL-BASED PHOSPHIDE FOR OXYGEN EVOLUTION REACTION IN ALKALINE WATER ELECTROLYSIS USING SODIUM HYPOPHOSPHITE SUBSTITUTION AND PYROLYSIS AND METHOD FOR PREPARATION THEREOF**

(30) Priority: 09.08.2023 KR 20230104171
(71) Applicant: Hanwha Solutions Corporation, Jung-gu Seoul 04541 (KR); UIF (University Industry Foundation), Yonsei University, Seoul 03722 (KR)
(72) Inventor: CHAE, Gyu Sik, Daejeon 34128 (KR); KIM, Gil Ho, Daejeon 34128 (KR); KIM, Hansung, Seoul 04194 (KR)
(74) Representative: Berggren Oy
(86) International application number: PCT/KR2024/011709
(87) International publication number: WO 2025/033986

(57) **Abstract**

The present disclosure relates to a method for preparing a nickel-based phosphide catalyst for oxygen evolution reaction in alkaline water electrolysis anode using sodium hypophosphite(NaH₂PO₂) substitution and pyrolysis.

## Description

### [TECHNICAL FIELD]

### CROSS-REFERENCE TO RELATED APPLICATION(S)

This application claims the benefit of Korean Patent Application No. 10-2023-0104171 filed on August 9, 2023 with the Korean Intellectual Property Office, the disclosure of which is incorporated herein by reference in its entirety.

The present disclosure relates to a nickel-based phosphide catalyst using sodium hypophosphite(NaH₂PO₂) substitution and pyrolysis and a method for preparation thereof, and more particularly, to a highly active non-precious metal phosphide catalyst for oxygen evolution reaction in alkaline water electrolysis anode that reduces the amount of phosphorus precursor used, does not use precious metals, and can achieve mass production, and a method for preparation thereof.

### [BACKGROUND]

Hydrogen energy is attracting attention as an alternative environmentally friendly energy for fossil fuels in that it is abundant in resources and does not emit harmful substances. Alkaline water electrolysis, which is one of the methods for producing hydrogen, is less expensive than polymer electrolyte membrane and solid oxide water electrolysis and is suitable for mass production. The oxygen generation electrode has the greatest impact on the reaction rate in alkaline water electrolysis. The oxygen evolution reaction(OER) in alkaline electrolytes generates O₂ through a four-electron reaction via four OH-, and therefore has a slow reaction rate relative to the hydrogen evolution reaction. Due to the complex reaction mechanism and slow reaction rate, a high overpotential occurs at the OER electrode, which becomes a major reason why alkaline electrolysis has a low efficiency. Therefore, using a catalyst having low overpotential for the OER reaction in the alkaline water electrolysis cells is essential to increase cell and stack efficiency.

OER electrochemical catalysts for alkaline water electrolysis are known that precious metal oxide catalysts such as IrO₂ and RuO₂ show excellent OER performance. However, since Ir and Ru are expensive and limiting noble metals, the development of non-precious metal catalysts to replace them is necessary. Alkaline water electrolysis can use relatively inexpensive transition metals such as Ni, Fe, and Co as catalyst materials unlike acidic environments. Among them, Ni is known to have excellent electrochemical reaction rate and corrosion resistance in alkaline solutions, and is easily alloyed with other metals, and thus Ni-based alloy catalysts are being actively studied.

As a method for preparing Ni-based OER catalysts, studies trying to lower the Tafel slope by doping Ni with non-metallic elements such as O, P, N, S, and Se are being actively advanced. It has been reported that Ni₂P, NiCo₂O₃, Ni₃Se₂, and the like have similar Tafel slopes to RuO₂ and IrO₂ in the oxygen evolution reaction. Among non-metallic elements, nickel phosphide(NiP) catalysts utilizing P have a core (phosphide)-shell (oxide) structure in which phosphide on the catalyst surface is eluted in the OER measurement process. Such a core-shell structure is known to have excellent catalytic activity and durability because it improves OER performance through the oxide in the shell, and the phosphide in the core can compensate for the insufficient electrical conductivity of the shell.

In order to further improve the performance of such NiP catalysts, methods of preparing or doping dissimilar alloys by introducing a second metal are being actively studied. Many papers have reported that NiCoP, NiFeP and NiFeCoP catalysts, which are produced by alloying two types or more, have higher OER performance than single-metal phosphides of NiP, CoP, and FeP. It has also been reported that when Fe is doped in NiCoP, the Fe optimizes the electronic structure and improves OER performance.

However, the method most widely used in the preparation of such metal phosphides is a chemical vapor deposition(CVD) method. The CVD method is a method for preparing phosphides by generating hydrogen phosphide(PH₃) at high temperatures using sodium hypophosphite(NaH₂PO₂) as a phosphorus precursor, and is most widely used in the preparation of phosphides. However, the CVD method heat-treats NaH₂PO₂ while being separated from the metal precursor, which results in poor contact between the metal and PH₃. Therefore, the metal precursor and NaH₂PO₂ are added at a mass ratio of 1:5 to 20 to prepare a metal phosphide. This CVD method is disadvantageous for mass production because not only it is an uneconomical method that uses an excessive amount of phosphorus precursor, but also the contact between the PH₃ generated from the phosphorus precursor and the metal precursor is low. Another method utilized in the preparation of metal phosphides is an electroplating method, which requires a substrate such as Ni foam as a substrate for plating. This electroplating method is a simple catalyst production method, but it is difficult to produce a powder-type catalyst, and therefore is not suitable for application to alkaline anion exchange membrane water electrolysis (AEMWE).

In order to solve such problems, there is a need to develop a highly active non-precious metal phosphide catalyst for alkaline water electrolysis anode in powder form that can be industrially mass-produced while reducing the amount of phosphorus precursor used.

### [DETAILED DESCRIPTION OF THE INVENTION]

### [Technical Problem]

It is an object of the present disclosure to provide a method for preparing a highly active non-precious metal phosphide catalyst for an oxygen evolution reaction in an alkaline water electrolysis anode that can achieve mass production while reducing the amount of phosphorus precursor used.

Specifically, according to the present disclosure, sodium in sodium hypophosphite, which is a phosphorus precursor, is replaced with nickel and a second metal to prepare a precursor in the form of nickel hypophosphite or a second metal hypophosphite, and the nickel hypophosphite and the second metal hypophosphite themselves are pyrolyzed to prepare a nickel-based phosphide, thereby reducing the phosphorus input amount to twice that of the metal as compared to conventional methods in which the molar ratio of phosphorus to the metal is set to 5 to 20 times that of the metal to generate hydrogen phosphine(PH₃) and prepare a phosphide. In addition, the nickel hypophosphite and the second metal hypophosphite themselves are pyrolyzed to obtain a nickel-based phosphide, thereby providing a preparation method which allows for high phosphide yield and mass production, and is more advantageous in terms of economic and process than existing methods.

More specifically, according to the present disclosure, in the process of preparing a nickel hypophosphite and a second metal hypophosphite precursor, a sodium in sodium hypophosphite is bonded with a chlorine contained in the metal salt and thus can be easily removed with sodium chloride in the water washing process, which functions as a filler that improves the surface area of the final nickel-based phosphide. In addition, the second metal perform a doping function that adjusts the electronic structure of nickel, thereby improving the oxygen generation performance of the nickel phosphide, and the remaining second metal that is not doped into the nickel phosphide in the heat treatment process can be easily removed in the washing process, which thus performs a second filler function. Therefore, the present disclosure aims to provide a method for preparing a porous nickel phosphide catalyst that is doped with a small amount of the second metal while having excellent oxygen generation performance.

### [Technical Solution]

According to one embodiment of the present disclosure, there is provided a method for preparing a nickel-based phosphide represented by the following Chemical Formula 1, comprising the steps of: dissolving nickel chloride as a first metal, a second metal(M) chloride, and sodium hypophosphite(NaH₂PO₂) in water (step 1); evaporating a solvent to obtain a nickel phosphide precursor and second metal phosphide precursor mixture (step 2); pyrolyzing the nickel phosphide precursor and second metal phosphide precursor mixture to obtain a composition containing a nickel-based phosphide (step 3); and washing the composition with water to obtain a nickel-based phosphide (step 4):

[Chemical Formula 1] NiMₓP_{y}

wherein x is 0.01 to 0.15, y is 0.5 to 1.2, and
M is one or more selected from the group consisting of Fe, Mo, Co, Mn, Cu, Zn, Cr, and V.

According to another embodiment of the present disclosure, there is provided a nickel-based phosphide represented by the following Chemical Formula 1 and having a BET surface area of 10 m²/g or more:

[Chemical Formula 1] NiMₓP_{y}

wherein x is 0.01 to 0.15, y is 0.5 to 1.2, and
M is one or more selected from the group consisting of Fe, Mo, Co, Mn, Cu, Zn, Cr, and V.

According to yet another embodiment of the present disclosure, there is provided an alkaline water electrolysis system comprising the nickel-based phosphide as an anode catalyst.

### [Advantageous Effects]

According to the method for preparing a nickel-based phosphide catalyst of the present disclosure, in order to replace Na⁺ with an oxidation number of +1 in sodium hypophosphite (NaH₂PO₂) with M²⁺ with an oxidation number of +2, NaH₂PO₂ is added in a molar ratio of twice that of metal chloride(MCl₂) to produce a precursor M(H₂PO₂)₂ in which metal and phosphorus are bonded, which is then pyrolyzed to leave metal phosphide ashes and produce a catalyst, thereby allowing for high yield and mass production.

Also, according to the preparation method of the present disclosure, most of the second metal is removed from the nickel-based phosphide ashes in the washing process, and only a small amount remains, which can not only provide a second metal doping effect to the nickel phosphide, but also function as a filler to form a porous surface at a position where the second metal is dissolved out.

Further, according to the preparation method of the present disclosure, in the solution stage where sodium hypophosphite(NaH₂PO₂) and metal chloride(MCl₂) are dissolved, ethanol is added to induce recrystallization of sodium chloride(NaCl) having low solubility in ethanol. The recrystallized sodium chloride can be uniformly mixed with the M(H₂PO₂)₂ precursor. This be dissolved out in the washing process and functions as a filler, thereby allowing the production and provision of a highly active nickel second metal phosphide catalyst having a large specific surface area.

In addition, the nickel second metal phosphide catalyst for the oxygen evolution reaction(OER) in alkaline water electrolysis anode of the present disclosure exhibits higher OER performance than iridium which is a precious metal catalyst despite the use of a non-precious metal alloy, and therefore has excellent catalytic properties, has a high yield of phosphide, and is advantageous in terms of economy and process in that contact between nickel and PH₃ is not required unlike the CVD method.

### [BRIEF DESCRIPTION OF THE DRAWINGS]

FIG. 1 is a schematic diagram showing a method for preparing a nickel iron phosphide catalyst.
FIG. 2 is an X-ray diffraction(XRD) pattern image of a catalyst prepared by varying the heat treatment temperature in Experimental Example 1 to 500, 400, 300, and 200°C.
FIG. 3 is a linear sweep voltammetry(LSV) graph which evaluates the oxygen evolution reaction(OER) by applying the nickel iron phosphide catalyst prepared in accordance with the heat treatment temperature in Experimental Example 1 to a rotating disk electrode(RDE).
FIG. 4 is an XRD pattern image of a catalyst before and after washing in Experimental Example 2.
FIG. 5 is a scanning electron microscope(SEM) image of a catalyst (a) before washing and (b) after washing in Experimental Example 2.
FIG. 6 is an X-ray photoelectron spectroscopy(XPS) graph of Experimental Example 3.
FIG. 7 is an LSV graph which evaluates the OER in Experimental Example 3.
FIG. 8 is a schematic diagram showing the difference in the final product according to the preparation process of Examples 1 and 2.
FIG. 9 is an SEM image of Examples 1 and 2 of Experimental Example 4.
FIG. 10 is an LSV graph which evaluates the OER in Experimental Example 4.
FIG. 11 is an LSV graph which evaluates the OER in Experimental Example 5.
FIG. 12 is an Electrochemical Impedance Spectroscopy(EIS) graph evaluated in Experimental Example 5.
FIG. 13 is an LSV graph which evaluates the OER in Experimental Example 6.

### [DETAILED DESCRIPTION OF THE EMBODIMENTS]

The terms "first," "second," etc. are used herein to explain various elements, and these terms are only used to distinguish one constitutional element from the other constitutional elements.

Technical terms used herein are provided to describe exemplary embodiments but are not intended to limit the present disclosure. The singular forms include plural forms unless the context clearly indicates otherwise. It should be understood that the terms "comprise," "include", "have", etc. are used herein to specify the presence of stated features, integers, steps, components or combinations thereof, but do not preclude the presence or addition of one or more other features, integers, steps, components, or combinations thereof.

And, in case it is stated that each layer or element is formed "on" or "above" each layers or elements, it means that each layer or element is formed right above each layer or element, or that other layers or elements may be additionally formed between the layers or on the object or substrate.

Although various modifications can be made to the present disclosure and the present disclosure may have various forms, specific examples will be illustrated and explained in detail below. However, it should be understood that these are not intended to limit the present disclosure to specific disclosure, and that the present disclosure includes all the modifications, equivalents or replacements thereof without departing from the spirit and technical scope of the present disclosure.

Below, a method for preparing a highly active non-precious metal phosphide catalyst for an alkaline water electrolysis anode according to embodiments of the disclosure will be described in detail.

The present disclosure aims to provide a method for preparing a highly active non-precious metal phosphide catalyst for an alkaline water electrolysis anode that can achieve mass production while reducing the amount of phosphorus precursor used.

A preparation method according to an embodiment of the present disclosure may comprise the steps of:
dissolving nickel chloride as a first metal, a second metal(M) chloride, and sodium hypophosphite(NaH₂PO₂) in water (step 1);
evaporating a solvent to obtain a nickel phosphide precursor and second metal phosphide precursor mixture (step 2);
pyrolyzing the nickel phosphide precursor and second metal phosphide precursor mixture to obtain a composition containing a nickel-based phosphide (step 3); and
washing the composition with water to obtain a nickel-based phosphide (step 4):

The nickel-based phosphide obtained above is represented by the following Chemical Formula 1.

[Chemical Formula 1] NiMₓP_{y}

wherein x is 0.01 to 0.15, y is 0.5 to 1.2, and
M is one or more selected from the group consisting of Fe, Mo, Co, Mn, Cu, Zn, Cr, and V.

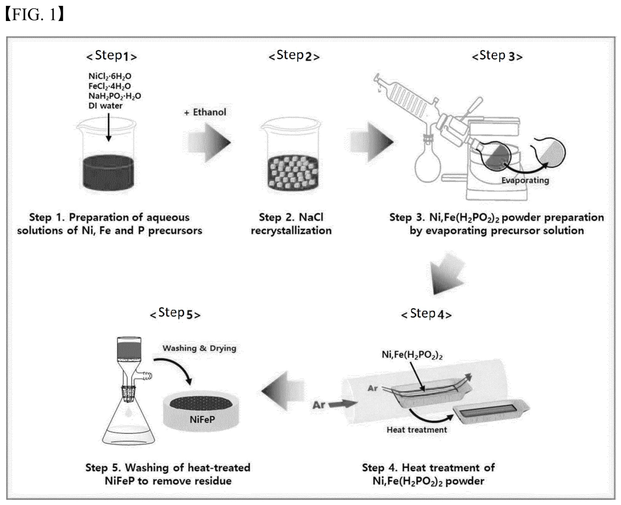

Specifically, FIG. 1 is a schematic diagram showing a method for preparing a phosphide using sodium hypophosphite(NaH₂PO₂) substitution and pyrolysis according to the present disclosure.

In order to replace Na⁺ with an oxidation number of +1 in sodium hypophosphite (NaH₂PO₂) with M²⁺ with an oxidation number of +2, NaH₂PO₂ is added in a molar ratio of at least twice that of metal chloride(MCl₂) to prepare a precursor M(H₂PO₂)₂, which is then pyrolyzed to prepare a metal phosphide.

Specifically, a metal salt and hypophosphite are dissolved in deionized water in a molar ratio of 1:2 (step 1). This solution is evaporated to remove only water, thereby obtaining a M(H₂PO₂)₂ mixture (step 2). The nickel phosphide precursor and second metal phosphide precursor mixture are pyrolyzed in an inert gas atmosphere to obtain a composition containing a metal phosphide (step 3). The obtained composition is washed with water, specifically, deionized water, to obtain a metal phosphide (step 4).

The nickel-based phosphide may be represented by the following Chemical Formula 1.

[Chemical Formula 1] NiMₓP_{y}

wherein x is 0.01 to 0.15, y is 0.5 to 1.2, and
M is one or more selected from the group consisting of Fe, Mo, Co, Mn, Cu, Zn, Cr, and V.

Specifically, x may be 0.01 or more, or 0.03 or more, or 0.06 or more, or 0.07 or more to 0.15 or less, or 0.12 or less, or 0.10 or less, or 0.80 or less.

Specifically, y may be 0.5 or more, or 0.7 or more, or 0.9 or more, or 0.99 or more to 1.2 or less, or 1.1 or less, or 1.06 or less.

Preferably, M may be Fe.

Only a small amount among the second metal added during the preparation of the nickel-based catalyst is doped in a nickel-based phosphide. The remaining second metal which is not doped is removed with water (deionized water) in the washing process. Since pores are formed in the nickel-based catalyst as much as the portion where the undoped second metal is removed, the second metal can perform a filler function in the preparation process. Thus, the use of the second metal can widen the surface area of the nickel-based phosphide catalyst and increase the catalytic efficiency. That is, the second metal is only partially doped in the catalyst, and the remainder is washed away, so that the content of the second metal in the prepared catalyst satisfies the x range of [Chemical Formula 1].

The (step 1) is a step of dissolving nickel chloride as a first metal, a second metal(M) chloride, and sodium hypophosphite(NaH₂PO₂) in water.

The second metal of the second metal salt other than the nickel salt may be at least one selected from the group consisting of Fe, Mo, Co, Mn, Cu, Zn, Cr, and V. Also, the second metal salt may be in the form of a chloride, which is MCl₂. Preferably, the second metal may be iron(Fe), and the second metal salt may be FeCl₂.

The water used as the solvent may be deionized water.

In the step 1, the ratio of mixing the nickel salt and the second metal salt with sodium hypophosphite may be made such that the sodium hypophosphite is mixed at 200 to 300 mol parts per 100 mol parts of the nickel chloride and the second metal chloride. Preferably, the sodium hypophosphite can be contained at 200 mol parts per 100 mol parts of the nickel chloride and the second metal chloride.

Considering the replacement of Na⁺, whose oxidation number of sodium hypophosphite (NaH₂PO₂) is +1, by nickel or second metal having an oxidation number of +2, and the oxygen generation efficiency and specific surface area of the final catalyst, it is preferable to mix the total amount of the nickel salt and the second metal salt with sodium hypophosphite within the above molar ratio range.

In the above step 1, the mixing ratio of nickel chloride and the second metal chloride may be 30 to 300 molar parts of the second metal chloride per 100 molar parts of nickel chloride.

Preferably, the mixing ratio may be 50 mol parts to 200 mol parts of the second metal chloride per 100 mol parts of nickel chloride, and more preferably, may be 100 mol parts of the second metal chloride per 100 mol parts of nickel chloride.

When the molar ratio of the nickel salt: second metal salt satisfies the above range, Ni₂P, which is a catalyst skeleton, is effectively formed, and the catalyst surface area is greatly improved, so that the oxygen generation efficiency of the catalyst can be excellent.

After the step 1, the method may further comprise a step of recrystallizing sodium chloride (NaCl) from the solution of nickel chloride, second metal(M) chloride and sodium hypophosphite dissolved in water.

Specifically, the step of recrystallizing sodium chloride may comprise a step of recrystallizing sodium chloride by adding a solvent having low solubility in sodium chloride to the nickel chloride, second metal(M) chloride and sodium hypophosphite dissolved in water.

Preferably, the solvent having low solubility in sodium chloride may be ethanol.

If a solvent having low solubility in sodium chloride is added to a solution of nickel chloride, second metal(M) chloride and sodium hypophosphite, sodium chloride is recrystallized. In this case, Ni₂P, which is a catalyst skeleton, is effectively formed, and sodium chloride is uniformly distributed between the precursors. This sodium chloride is then removed in a washing process and forms pores in the nickel-based phosphide catalyst, thereby exhibiting a filler effect in the preparation process. Therefore, when ethanol is used, sodium chloride is easily recrystallized and the filler effect is maximized, so that the surface area of the catalyst is greatly improved due to the formation of pores, and the oxygen generation efficiency of the catalyst can be further increased.

The step 2 is a step of evaporating a solvent to obtain a nickel phosphide precursor and second metal phosphide precursor mixture. If the step of recrystallizing sodium chloride is further performed, the water and solvent can be evaporated to obtain a nickel phosphide precursor and second metal phosphide precursor mixture in which sodium chloride crystals are dispersed.

In the step 2, the nickel phosphide precursor may be nickel hypophosphite(Ni(H₂PO₂)₂-), and the second metal phosphide precursor may be a second metal hypophosphite(M(H₂PO₂)₂).

The solvent may be water, and the water may be deionized water.

In addition, the solvent may further include a solvent added for recrystallization of sodium chloride. The solvent added for recrystallization of sodium chloride may be a solvent having low solubility in sodium chloride, and preferably may be ethanol.

If the solvent is evaporated in the step 2, the nickel phosphide precursor and second metal phosphide precursor mixture can be obtained in a powder state. When the step of recrystallizing sodium chloride is further performed, the nickel phosphide precursor and second metal phosphide precursor mixture in which sodium chloride crystals are dispersed can be obtained in a powder state.

The step 3 is a step of pyrolyzing the nickel phosphide precursor and second metal phosphide precursor mixture to obtain a composition containing a nickel-based phosphide.

The pyrolysis temperature may be 250 to 500°C. Preferably, the pyrolysis temperature may be 250 to 400°C, or 250 to 300°C.

When the heat treatment temperature satisfies the above range, the increase in impurities bonded with the second metal, especially iron(Fe) and oxygen(O), is small, and the BET surface area is greatly improved, so that the oxygen generation efficiency of the catalyst can be excellent.

In addition, the pyrolysis of the step 3 may be a step of performing heat treatment for about 90 minutes under an inert gas atmosphere. Preferably, the inert gas may be argon.

The step 4 may be a step of washing the composition obtained in step 3 with water to obtain a nickel-based phosphide.

The composition containing a nickel-based phosphide may include a nickel-based phosphide, a pyrolysis byproduct and a second metal, which are obtained by pyrolyzing a nickel phosphide precursor and a second metal phosphide precursor.

The pyrolysis byproduct may include sodium chloride(NaCl). Sodium chloride may be produced by a reaction between sodium in sodium hypophosphite and chlorine in nickel chloride or second metal chloride.

In addition, during the washing of the step 4, the residual second metal that is not doped in the nickel-based phosphide may be removed. For example, iron may be removed in a chloride state.

The pyrolysis by-products, sodium chloride(NaCl) and second metal, can exist in the catalyst as fillers until the pyrolysis process, and then leave pores in the catalyst and is washed and disappeared in the washing step. Thereby, porosity can be imparted to the catalyst through the washing process. In addition, the second metal can be partially doped in the catalyst, and dissolved in water in the form of iron chloride (e.g., FeCl₂) and removed, thereby imparting porous characteristic to the catalyst.

A nickel-based phosphide catalyst in which a second metal is partially doped in a nickel phosphide catalyst has the advantages in that as compared to a conventional phosphide catalyst containing only nickel, the second metal adjusts the electronic structure of nickel in a direction that further strengthens electrophilicity, so that OH-, which is a water electrolysis reaction material, is more adsorbed to the electrode, thereby improving OER performance.

The water in the washing step may be deionized water.

One embodiment of the present disclosure can provide a nickel-based phosphide catalyst prepared by the above preparation method.

Specifically, the nickel-based phosphide can be represented by the following Chemical Formula 1,

[Chemical Formula 1] NiMₓP_{y}

wherein x is 0.01 to 0.15, y is 0.5 to 1.2, and
M is one or more selected from the group consisting of Fe, Mo, Co, Mn, Cu, Zn, Cr, and V.

Specifically, x may be 0.01 or more, or 0.03 or more, or 0.06 or more, or 0.07 or more to 0.15 or less, or 0.12 or less, or 0.10 or less, or 0.80 or less.

Specifically, y may be 0.5 or more, or 0.7 or more, or 0.9 or more, or 0.99 or more to 1.2 or less, or 1.1 or less, or 1.06 or less.

Preferably, M may be Fe.

The nickel-based phosphide may have a BET surface area of 10 m²/g or more.

Preferably, the BET surface area may be 10 m²/g or more, 11 m²/g or more, 20 m²/g or more, 30 m²/g or more, or 32 m²/g or more, or 35 m²/g or more, or 37 m²/g or more, or 40 m²/g or more, or 42 m²/g or more, or 45 m²/g or more to 50 m²/g or less, 48 m²/g or less, or 46 m²/g or less.

When prepared according to the preparation method of the present disclosure, the nickel-based phosphide has a porous structure, so that when used as an oxygen generating catalyst, it has a large specific surface area and can exhibit excellent oxygen generation efficiency.

According to another embodiment of the disclosure, an anode catalyst for alkaline water electrolysis comprising the nickel-based phosphide can be provided.

In addition, according to yet another embodiment of the disclosure, an alkaline water electrolysis system comprising the anode catalyst can be provided.

Hereinafter, preferred examples are presented for better understanding the present disclosure. However, the following examples are for illustrative purposes only and are not intended to limit the present disclosure.

### Example 1: Preparation of nickel iron phosphide NiFeP catalyst using NaH₂PO₂ substitution and pyrolysis

To prepare a nickel iron phosphide, nickel(II) chloride hexahydrate(NiCl_{2·}6H₂O) and iron(II) chloride tetrahydrate(FeCl₂·₄H₂O) were used in a molar ratio of 1:1. Also, 200 mol parts of sodium hypophosphite(NaH₂PO₂) were added per 100 mol parts of nickel(II) chloride hexahydrate and iron(II) chloride tetrahydrate, so that nickel(II) chloride hexahydrate, iron(II) chloride tetrahydrate and sodium hypophosphite were dissolved in deionized water. At this time, 4.75 g of NiCl₂·6H₂O, 4.06 g of FeCl₂·4H₂O, and 8.56 g of sodium hypophosphite were used, and 40 ml of deionized water was used.

Ethanol was added to the solution in which chlorides and sodium hypophosphite were dissolved, so that Na⁺ and Cl⁻ were recrystallized into sodium chloride(NaCl).

Water and ethanol were removed from the solution in which sodium chloride was recrystallized using an evaporator, thereby obtaining a Ni(H₂PO₂)₂ and Fe(H₂PO₂)₂ precursor mixture powder in which sodium chloride crystals were dispersed.

The recovered Ni(H₂PO₂)₂ and Fe(H₂PO₂)₂ precursor mixture in which sodium chloride crystals were dispersed was spread on an alumina boat for heat treatment, placed in a furnace, and heat-treated at 300°C for 90 minutes under a 100% argon atmosphere.

After the heat treatment, the mixture was washed and filtered three times using deionized water, dried in an oven at 80°C for 3 hours, and then nickel iron phosphide was recovered.

### Example 2: Preparation of nickel iron phosphide NiFeP catalyst without sodium chloride recrystallization

To prepare a nickel iron phosphide, nickel(II) chloride hexahydrate(NiCl_{2·}6H₂O) and iron(II) chloride tetrahydrate(FeCl₂·₄H₂O) were used in a molar ratio of 1:1. Also, 200 mol parts of sodium hypophosphite(NaH₂PO₂) were added per 100 mol parts of nickel(II) chloride hexahydrate and iron(II) chloride tetrahydrate, so that nickel(II) chloride hexahydrate, iron(II) chloride tetrahydrate and sodium hypophosphite were dissolved in deionized water. At this time, 4.75 g of NiCl₂·6H₂O, 4.06 g of FeCl₂·4H₂O, and 8.56 g of sodium hypophosphite were used, and 40 ml of deionized water was used.

Water was removed from the solution using an evaporator, thereby obtaining a Ni(H₂PO₂)₂ and Fe(H₂PO₂)₂ precursor mixture powder.

The recovered Ni(H₂PO₂)₂ and Fe(H₂PO₂)₂ precursor mixture was spread on an alumina boat for heat treatment, placed in a furnace, and heat-treated at 300°C for 90 minutes under a 100% argon atmosphere.

After the heat treatment, the mixture was washed and filtered three times using deionized water, dried in an oven at 80°C for 3 hours, and then nickel iron phosphide was recovered.

### Comparative Example 1: Preparation of nickel phosphide NiP catalyst using NaH₂PO₂ substitution and pyrolysis

To prepare a nickel phosphide, nickel(II) chloride hexahydrate(NiCl_{2·}6H₂O) was used as the metal chloride. Also, 9.5 g of NiCl₂.6H₂O and 8.56 g of NaH₂PO₂ were added to 40 ml of deionized water so that the molar ratio of metal chloride to NaH₂PO₂ was 1:2. Only water was removed from the solution in which nickel and phosphorus salt was well dissolved using an evaporator to obtain a Ni(H₂PO₂)₂ precursor, which is a precursor of NiFeP.

The recovered Ni(H₂PO₂)₂ precursor was spread on an alumina boat for heat treatment, placed in a furnace, and heat-treated at 300°C for 90 minutes under a 100% argon atmosphere.

After the heat treatment, the mixture was washed and filtered three times using deionized water, dried in an oven at 80°C for 3 hours, and then nickel phosphide was recovered.

### Comparative Example 2: Commercially Available Ir Black Catalyst

99.95% iridium metal powder (Ir Black) available from Alpha Aesar was prepared as Comparative Example 2.

### Experimental Example 1: Evaluation of Physical Properties and OER Activity of Nickel Iron Phosphide NiFeP Catalyst According to Heat Treatment Temperature Using NaH₂PO₂ Substitution and Pyrolysis

In Experimental Example 1, during the preparation of a nickel iron phosphide catalyst using NaH₂PO₂ substitution and pyrolysis in Example 2, the heat treatment temperature was changed from 300°C to 500, 400 and 200°C to prepare a catalyst, and an experiment was conducted to evaluate the physical properties and oxygen evolution reaction(OER) activity of the nickel iron phosphide according to the heat treatment temperature.

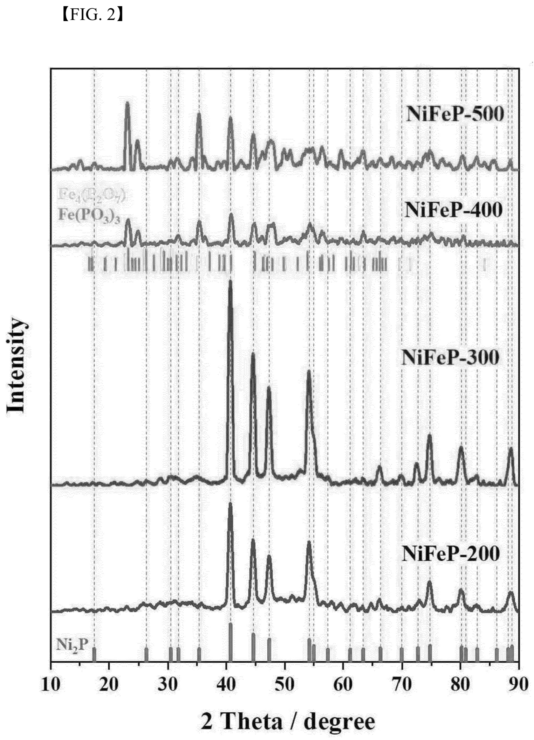

FIG. 2 is an XRD pattern image of a catalyst prepared in accordance with the heat treatment temperature. In the preparation process of the present disclosure, the nickel iron phosphide precursor (Ni(H₂PO₂)₂ and Fe(H₂PO₂)₂) contains oxygen, and thus impurities in the form of oxides having no OER activity may be included in the final product in response to the bonding reaction with oxygen resulting from the increase in the heat treatment temperature. Therefore, from the XRD pattern of FIG. 2, it was confirmed that as the heat treatment temperature increased above 400°C, the intensity of the Ni₂P peak decreased and impurities such as Fe(PO₃)₃, FePO₄, Fe₄(P₂O₇)₃, and P₂O₅ were formed. At 200°C and 300°C, only Ni₂P with high OER activity was formed without impurity peaks. However, at 200°C, the intensity of the Ni₂P peak was small, which were about half the intensity at 300°C.

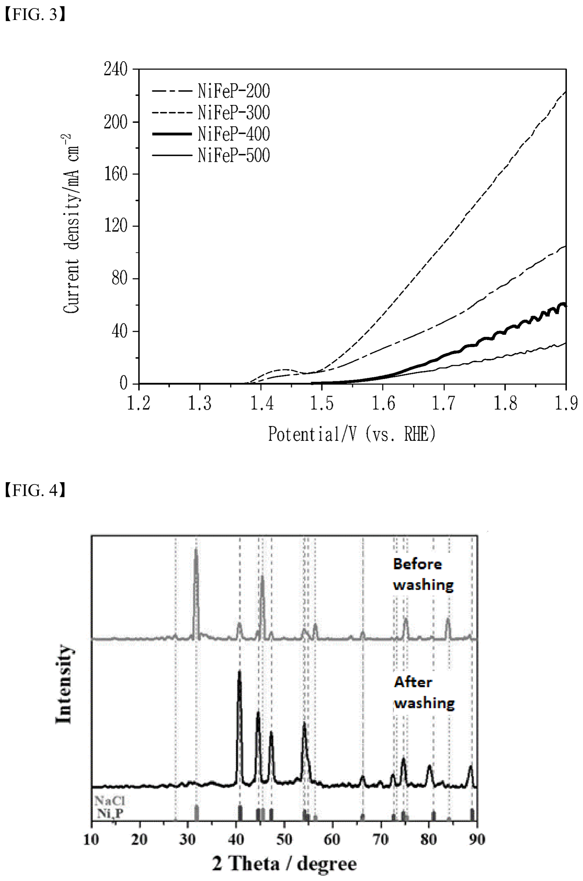

FIG. 3 is a linear sweep voltammetry(LSV) graph which evaluates the oxygen evolution reaction(OER) by applying the nickel iron phosphide catalyst prepared in accordance with the heat treatment temperature to a rotating disk electrode(RDE).

To evaluate OER, RDE with a disk area of 0.247 cm² was used as a working electrode in a three-electrode system. The ink to be applied on the RDE was prepared so as to have a density of 700 µg/cm² on a metal basis. The three-electrode system consisted of Hg/HgO as the reference electrode, Pt wire as the counter electrode, and 1M KOH as the electrolyte.

The ink of the water electrolysis anode catalyst prepared using NaH₂PO₂ substitution and pyrolysis according to the present disclosure was applied to the RDE, dried, and then connected to a rotator. The electrode was rotated at 2500 rpm, and the LSV was measured at a scan rate of 5 mV/s in the potential range of 0.922~1.92 V (vs. RHE) to evaluate the OER. Based on the measured LSV results, the overpotential at current densities of 20 mA/cm² and 120 mA/cm² is summarized in Table 1 below.

**[Table 1]**

| | Overpotential | |
|---|---|---|
| | @ 20 mA cm⁻² | @ 120 mA cm⁻² |
| NiFeP-200 °C | 337 mV | - |
| NiFeP-300 °C | 296 mV | 494 mV |
| NiFeP-400 °C | 464 mV | - |
| NiFeP-500 °C | 550 mV | - |

As shown in Table 1, as the temperature increased above 400°C, the intensity of the Ni₂P peak with high OER activity decreased, impurities Fe(PO₃)₃ and FePO₄, Fe₄(P₂O₇)₃, and P₂O₅ were formed, the OER overpotential increased significantly and the voltage was not measured at 120 mA/cm². In the case of 200°C, the intensity of the Ni₂P peak decreased, and the overpotential was high at 120 mA/cm₂, thereby making it impossible to measure within the LSV scan range of 1.92 V. When heat-treated at 300°C, it was confirmed that Ni₂P was formed most excellently in XRD, and the OER overpotential was measured to be the smallest, so that the OER performance was the highest.

### Experimental Example 2: Confirmation of the Filler Effect of NaCl

Experimental Example 2 is an experiment to confirm the filler effect of sodium chloride(NaCl) contained in the precursor in the present disclosure.

In order to verify the filler effect of NaCl alone, the NiP catalyst before and after washing during the catalyst preparation according to Comparative Example 1 was analyzed through X-ray diffraction(XRD) patterns, surface area analysis equipment(Brunauer Emmett Teller, BET), and scanning electron microscope(SEM) images.

FIG. 4 shows the XRD patterns of the catalyst before and after washing during the catalyst preparation according to Comparative Example 1. In the XRD pattern of the catalyst that was not washed after heat treatment, the NaCl peak was clearly confirmed with a large intensity. In the XRD pattern of the catalyst after washing, the NaCl peak completely disappeared, and only the Ni₂P peak was confirmed. It was shown that after heat treatment, NaCl was present in the catalyst, but was completely removed by the washing process.

In order to confirm the specific surface area and pore volume before and after washing, the BET was measured through the adsorption and desorption of nitrogen gas at 77 K, and summarized in Table 2 below.

**[Table 2]**

| | BET surface area (m²/g) | Pore volume (cm³/g) |
|---|---|---|
| Before washing | 0.56 | 0.0052 |
| After washing | 4.9 | 0.025 |

In the nickel phosphide catalyst without washing, the pore volume was 0.0052 cm²/g and the specific surface area was 0.56 m²/g, so that almost no pores were formed on the surface, and the specific surface area of the catalyst was very small. On the other hand, in the nickel phosphide, which is the final product after washing, the pore volume was 0.025 cm²/g and the specific surface area was 4.9 m²/g, so that the pores were well-developed.

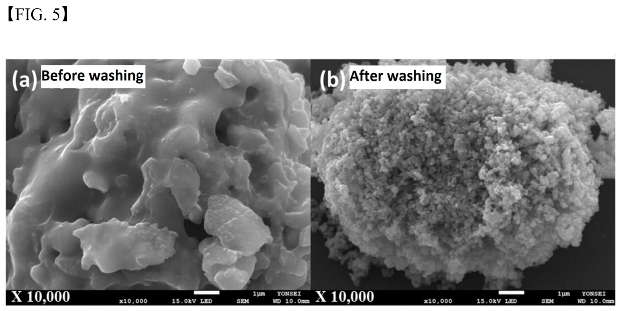

FIG. 5 shows SEM images of the catalyst (a) before washing and (b) after washing during the preparation of the catalyst according to Comparative Example 1. In the same magnification images, almost no pores were formed before washing, whereas pores were formed between the particles after washing. As a rich porous surface was formed on the catalyst, the specific surface area of the catalyst was increased, which means that the active area where OER can occur is large. In addition, due to the large surface area, charge transfer and mass transfer are promoted, which can exhibit more desirable catalytic performance.

When the XRD pattern of FIG. 4, the SEM image of FIG. 5, and the BET results of Table 2 were analyzed together, it can be seen that the NaCl that filled the gap between the nickel phosphide catalysts during the heat treatment was completely removed in the washing process, thereby contributing to the improvement of the surface area.

### Experimental Example 3: Confirmation of the doping effect of Fe in nickel iron phosphide

In Experimental Example 3, in order to confirm the doping effect of Fe in the nickel iron phosphide prepared by the present disclosure, an experiment was conducted to measure the valence state and evaluate the OER activity of the catalyst nickel iron phosphide prepared by Example 2 and the catalyst nickel phosphide prepared by Comparative Example 1 using an X-ray photoelectron spectroscopy (XPS).

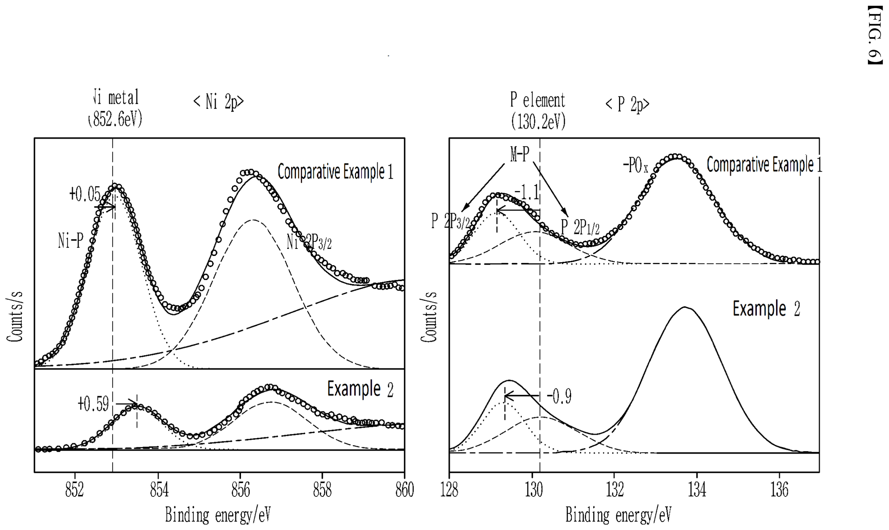

FIG. 6 shows the spectra of the Ni 2p and P 2p regions by measuring XPS of the catalysts prepared by Example 2 and Comparative Example 1. The binding energy of 852.6 eV in the Ni 2p region is the intrinsic binding energy of nickel metal.

The binding energy of 852.65 eV measured in Comparative Example 1 is due to the binding of nickel phosphide, and is shifted in a positive direction compared to nickel metal, meaning that nickel loses electrons and has a partial positive electric charge.

The binding energy of 853.19 eV of nickel phosphide measured in the Ni 2p region in Example 2 is shifted in a more positive direction compared to Comparative Example 1 due to the doping effect of iron.

The binding energy of 130.2 eV in the P 2p region is the intrinsic binding energy of P element.

The binding energy of 129.1 eV measured in Comparative Example 1 and the binding energy of 129.3 eV measured in Example 2 were due to the bonding of metal phosphide, which is shifted in the negative direction compared to the P element, meaning that phosphorus obtained electrons from nickel and had a partial negative electric charge.

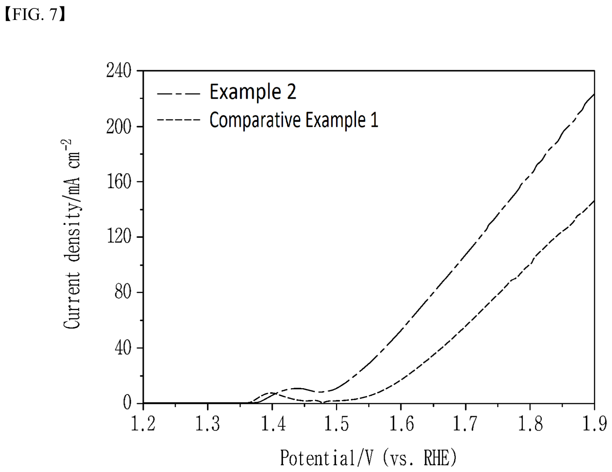

FIG. 7 is an LSV graph which evaluates OER by applying the catalytic nickel iron phosphide prepared by Example 2 and the catalytic nickel phosphide prepared by Comparative Example 1 to the rotating RDE.

To evaluate OER, RDE with a disk area of 0.247 cm² was used as a working electrode in a three-electrode system. The ink to be applied on the RDE was prepared so as to have a density of 700 µg/cm² on a metal basis. The three-electrode system consisted of Hg/HgO as the reference electrode, Pt wire as the counter electrode, and 1M KOH as the electrolyte.

The ink of the water electrolysis anode catalyst prepared using NaH₂PO₂ substitution and pyrolysis according to the present disclosure was applied to the RDE, dried, and then connected to a rotator. The electrode was rotated at 2500 rpm, and the LSV was measured at a scan rate of 5 mV/s in the potential range of 0.922~1.92 V (vs. RHE) to evaluate the OER. Based on the measured LSV results, the overpotential at current densities of 20 mA/cm² and 120 mA/cm² is summarized in Table 3 below.

**[Table 3]**

| | Overpotential | |
|---|---|---|
| | @ 20 mA cm⁻² | @ 120 mA cm⁻² |
| Example 2 | 296 mV | 494 mV |
| Comparative Example 1 | 377 mV | 610 mV |

As shown in Table 3, the OER measurement results showed that the NiFeP catalyst of Example 2 to which Fe was added exhibited a lower overpotential and significantly increased in OER performance compared to NiP of Comparative Example 1. Nickel that has lost electrons becomes stronger electrophilic, so that OH⁻, which is a reactant of alkaline water electrolysis OER, is further adsorbed on the electrode, thereby improving OER performance. The doping of iron adjusts the electronic structure of nickel phosphide, strengthens the electrophilicity of nickel, and enhances the active site for charge transfer and OH⁻ adsorption, thereby increasing OER activity.

### Experimental Example 4: Evaluation of the physical properties and OER activity of nickel iron phosphide NiFeP catalyst with improved surface area through NaCl recrystallization

Experimental Example 4 is an experiment that measured the SEM images, BET surface area, and OER performance of the NiFeP catalysts prepared in Examples 1 and 2. In Example 1, ethanol was added to the precursor solution to recrystallize NaCl having low solubility in ethanol, and then water was evaporated to prepare the precursor.

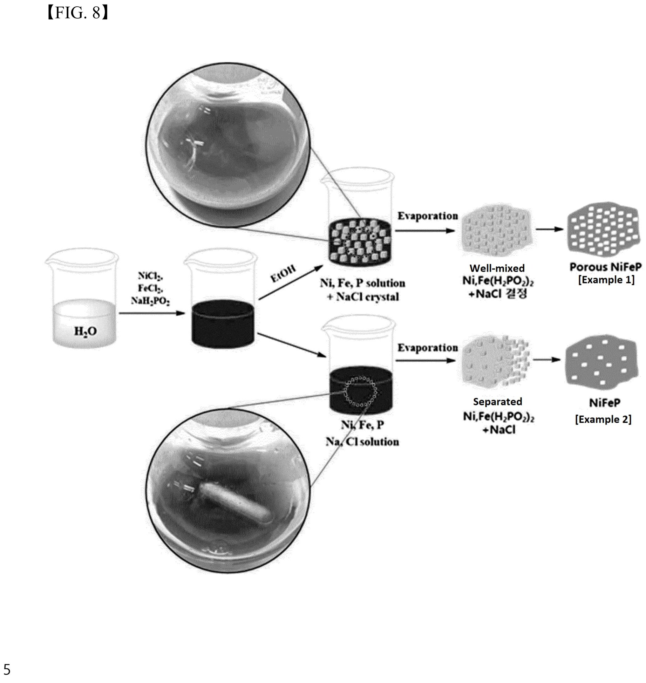

FIG. 8 is a schematic diagram showing the difference in the final product according to the preparation process of Examples 1 and 2. In the case of Example 1 in which ethanol was added to the precursor solution of Ni, Fe, and P to recrystallize only NaCl first, the Ni,Fe(H2PO₂)₂ precursor and NaCl crystals formed after water evaporation were well mixed, and after washing, porous NiFeP was prepared as the final product. In the case of Example 2 in which NaCl recrystallization using ethanol was not performed, the Ni, Fe(H₂PO₂)₂ precursor and the NaCl crystals were not well mixed but separated, and thus NaCl did not function as a sufficient filler and more pores were not formed compared to Example 1.

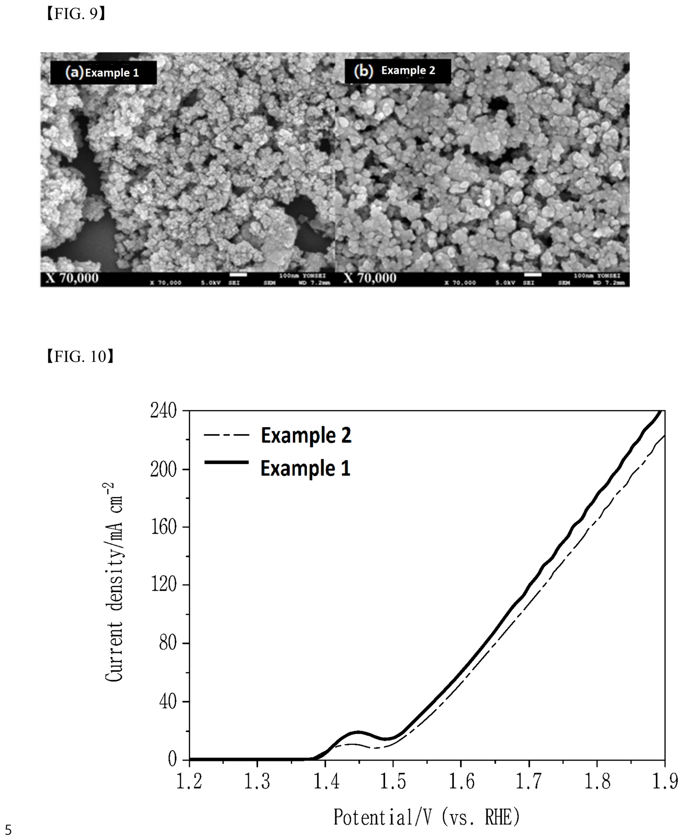

FIG. 9 shows SEM images of catalysts prepared according to (a) Example 1 and (b) Example 2, confirming that in the case of Example 1 in which ethanol was added at the same magnification to pre-crystallize NaCl, smaller particles were formed and more pores were formed.

In order to confirm the specific surface area and pore volume of the catalysts prepared according to Examples 1 and 2, BET was measured through adsorption and desorption of nitrogen gas at 77 K, and the results are summarized in Table 4 below.

**[Table 4]**

| | BET surface area (m²/g) | Pore volume (cm³/g) |
|---|---|---|
| Example 1 | 30.9 | 0.065 |
| Example 2 | 11.9 | 0.035 |

The specific surface area of Example 2 was 11.9 m²/g, which was increased compared to 4.9 m²/g of Comparative Example 1 measured previously. This is because Fe was dissolved and removed, which acted as a second filler.

In Example 1, as ethanol was added to the precursor solution, NaCl having a low solubility in ethanol was recrystallized, and while evaporating the solution, the M(H₂PO₂)₂ precursor and NaCl were effectively mixed to form uniform pores, so that the specific surface area was 30.9 m²/g, which increased about 3 times compared to 11.9 m²/g of Example 2.

In order to confirm the composition of the final product of the catalysts prepared according to Examples 1 and 2, the atomic ratios of Ni, Fe, and P measured by an inductively coupled plasma optical emission spectrometer (ICP-OES) are summarized in Table 5 below.

**[Table 5]**

| | Ni | Fe | P |
|---|---|---|---|
| Example 1 | 1 | 0.08 | 0.99 |
| Example 2 | 1 | 0.03 | 1.06 |

Nickel and phosphorus are formed in a ratio of about 1:1, and iron remains in a small amount, which provides a doping effect. The iron content in Example 1 is slightly increased compared to Comparative Example 1.

FIG. 10 is an LSV graph which evaluates OER by applying the catalysts prepared in Examples 1 and 2 to RDE. To evaluate OER, RDE with a disk area of 0.247 cm² was used as a working electrode in a three-electrode system. The ink to be applied on the RDE was prepared so as to have a density of 700 µg/cm² on a metal basis. The three-electrode system consisted of Hg/HgO as the reference electrode, Pt wire as the counter electrode, and 1M KOH as the electrolyte.

The inks of the nickel iron phosphide catalysts prepared in Examples 1 and 2 were applied to an RDE, dried, and then connected to a rotator. The electrode was rotated at 2500 rpm, and the LSV was measured at a scan rate of 5 mV/s in the potential range of 0.922~1.92 V (vs. RHE) to evaluate the OER. Based on the measured LSV results, the overpotential at current densities of 20 mA/cm² and 120 mA/cm² is summarized in Table 6 below.

**[Table 6]**

| | Overpotential | |
|---|---|---|
| | @ 20 mA cm⁻² | @ 120 mA cm⁻² |
| Example 2 | 296 mV | 494 mV |
| Example 1 | 283 mV | 469 mV |

As can be seen in FIG. 10 and Table 6,the nickel iron phosphide prepared in Example 1 showed a lower overpotential at both low and high current densities than the nickel iron phosphide prepared in Example 2.

Totally considering the results in FIGS. 9 and 10 and Tables 4, 5 and 6, in Example 1, the specific surface area is increased by three times or more, the active area is increased, pores are developed, and mass transfer is improved in addition to the doping effect of Fe in the nickel iron phosphide Ni₂P of Example 2. Therefore, the catalytic activity increased due to low overpotential at both low and high current densities.

This only shows that Example 1 is superior to Example 2, and does not mean that Example 2 has no technical significance. Even when comparing Example 2 with the overpotential of Comparative Example 1 described above and the overpotential of Comparative Example 2 described below, it can be seen that it shows superior effects compared to the Comparative Example.

### Experimental Example 5: Comparison of OER Performance with Commercially Available Ir Black

Experimental Example 5 is an experiment to measure the OER performance and resistance of commercially available Ir black, which is an excellent oxygen evolution reaction catalyst of Comparative Example 2, and the NiFeP catalyst prepared in Example 1.

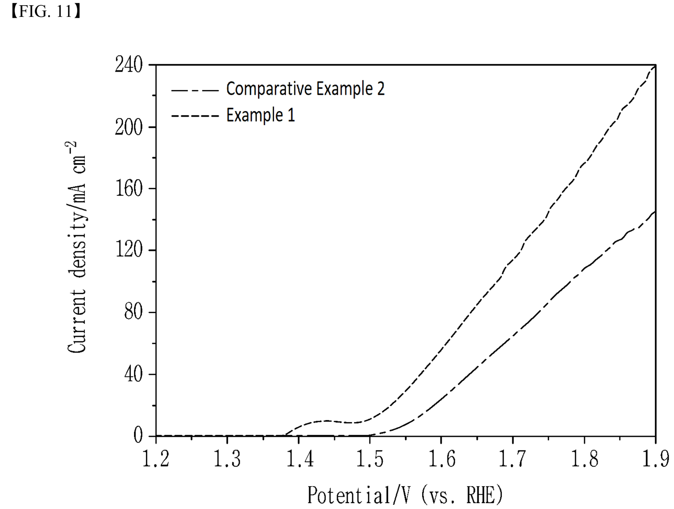

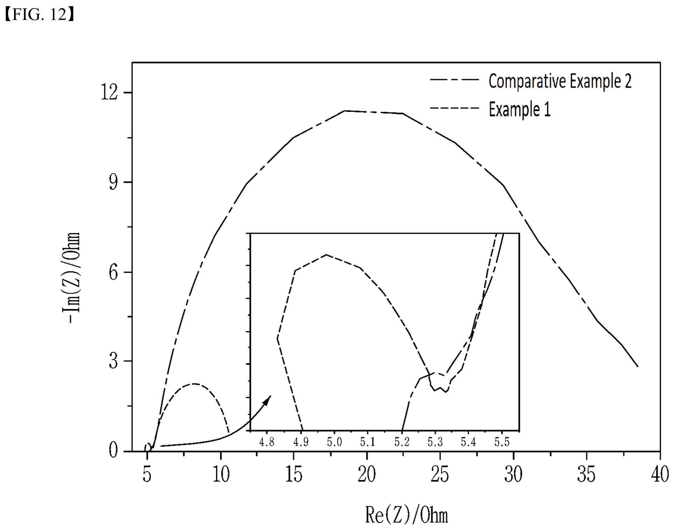

FIG. 11 is an LSV graph which evaluates OER by applying the catalysts prepared in Comparative Example 2 and Example 1 to RDE, and FIG. 12 is an electrochemical impedance spectroscopy(EIS) graph evaluated immediately after LSV measurement. To measure LSV and EIS, an RDE with a disk area of 0.247 cm² was used as a working electrode in a three-electrode system. The ink to be applied on the RDE was prepared so as to have a density of 700 µg/cm² on a metal basis. The three-electrode system consisted of Hg/HgO as the reference electrode, Pt wire as the counter electrode, and 1M KOH as the electrolyte.

The inks of the commercially available Ir black of Comparative Example 2 and the nickel iron phosphide catalyst prepared in Example 1 were applied to the RDE, dried, and then connected to a rotator. The electrode was rotated at 2500 rpm, and the LSV was measured at a scan rate of 5 mV/s in the potential range of 0.922~1.92 V (vs. RHE) to evaluate the OER. Then, EIS was measured in the frequency range of 100 kHz~100 mHz at a potential of 1.522 V (vs. RHE). Based on the measured LSV results, the overpotential at current densities of 20 mA/cm² and 120 mA/cm² and the ohmic resistance from EIS graphs are summarized in Table 7 below.

**[Table 7]**

| | Overpotential | | Ohmic resistance (Ohm) |
|---|---|---|---|
| | @ 20 mA cm⁻² | @ 120 mA cm⁻² | |
| Comparative Example 2 | 358 mV | 603 mV | 5.2 |
| Example 1 | 283 mV | 469 mV | 4.94 |

As seen in FIG. 11 and Table 7, the nickel iron phosphide prepared in Example 1 showed much lower overpotential than Ir black at both low and high current densities.

As seen in FIG. 12 and Table 7, the nickel iron phosphide prepared in Example 1 showed lower charge transfer resistance and ohmic resistance than Ir black.

Totally considering the results in FIGS. 11 and 12 and Table 7, the nickel iron phosphide prepared in Example 1 showed much improved charge transfer resistance due to the effect of Fe doping on Ni₂P with high OER activity and the high specific surface area obtained by the filler effect, and showed much lower overpotential than commercially available Ir black at both low and high current densities under an alkaline environment, thereby being very excellent in OER activity.

### Experimental Example 6: Confirmation of reproducibility during scale-up of nickel iron phosphide catalyst using NaH₂PO₂ substitution and pyrolysis

Experimental Example 6 is an experiment to confirm the reproducibility during scale-up of nickel iron phosphide catalyst manufactured according to the present disclosure. An experiment was conducted to evaluate the OER activity of nickel iron phosphide prepared by varying the capacity per batch to 0.5 g and 2 g.

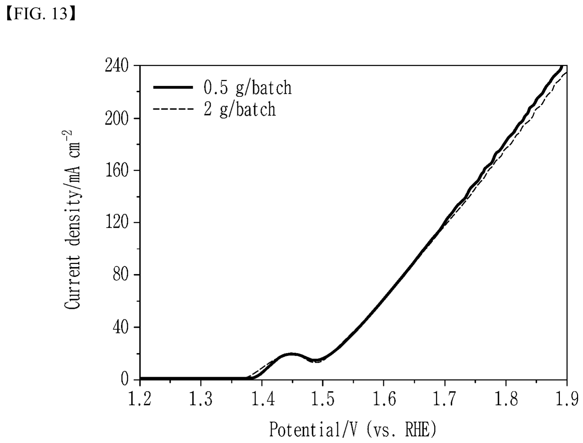

FIG. 13 is an LSV graph which evaluates the OER by applying the catalyst prepared by varying the capacity per batch to 0.5 g and 2 g in Example 1 to RDE.

To evaluate the OER, an RDE with a disk area of 0.247 cm² was used as a working electrode in a three-electrode system. The ink to be applied on the RDE was prepared so as to have a density of 700 µg/cm² on a metal basis. The three-electrode system consisted of Hg/HgO as the reference electrode, Pt wire as the counter electrode, and 1M KOH as the electrolyte.

The inks of the water electrolysis anode catalyst prepared using NaH₂PO₂ substitution and pyrolysis according to the present disclosure was applied to the RDE, dried, and then connected to a rotator. The electrode was rotated at 2500 rpm, and the LSV was measured at a scan rate of 5 mV/s in the potential range of 0.922~1.92 V (vs. RHE) to evaluate the OER. Even if the volume is changed, the OER overpotential of the final product NiFeP does not change. Therefore, all the OER performances due to scale-up can be reproduced as they are.

Therefore, the method for preparing the nickel iron phosphide catalyst of the present disclosure is a method in which nickel iron phosphide is prepared by pyrolyzing the hypophosphite nickel iron precursor itself, which is formed by substituting sodium with nickel and iron in NaH₂PO₂, and contact with the gas supplied to the furnace is not important, thereby allowing mass production according to the increase in the capacity of the precursor to be heat-treated.

## Claims

1. A method for preparing a nickel-based phosphide represented by the following Chemical Formula 1, comprising the steps of:
dissolving nickel chloride as a first metal, a second metal(M) chloride, and sodium hypophosphite(NaH₂PO₂) in water (step 1);
evaporating a solvent to obtain a nickel phosphide precursor and second metal phosphide precursor mixture (step 2);
pyrolyzing the nickel phosphide precursor and second metal phosphide precursor mixture to obtain a composition containing a nickel-based phosphide (step 3); and
washing the composition with water to obtain a nickel-based phosphide (step 4):
[Chemical Formula 1] NiMₓP_{y}
wherein x is 0.01 to 0.15, y is 0.5 to 1.2, and
M is one or more selected from the group consisting of Fe, Mo, Co, Mn, Cu, Zn, Cr, and V.

2. The method for preparing a nickel-based phosphide according to claim 1, wherein:
after the step 1,
the method further comprises adding a solvent to the solution of nickel chloride, second metal(M) chloride and sodium hypophosphite dissolved in water to recrystallize sodium chloride(NaCl).

3. The method for preparing a nickel-based phosphide according to claim 1, wherein:
the nickel phosphide precursor is nickel hypophosphite, and the second metal phosphide precursor is a second metal hypophosphite.

4. The method for preparing a nickel-based phosphide according to claim 1, wherein:
in the step 1, sodium hypophosphite is mixed at 200 to 300 mol parts per 100 mol parts of the nickel chloride and the second metal chloride.

5. The method for preparing a nickel-based phosphide according to claim 1, wherein:
the second metal(M) is Fe.

6. The method for preparing a nickel-based phosphide according to claim 1, wherein:
in the (step 1),
the mixing ratio of the nickel chloride and the second metal chloride is 30 mol parts to 300 mol parts of the second metal chloride per 100 mol parts of the nickel chloride.

7. The method for preparing a nickel-based phosphide according to claim 1, wherein:
in the (step 4),
the pyrolysis temperature is 250 to 500°C.

8. The method for preparing a nickel-based phosphide according to claim 2, wherein:
the solvent is ethanol.

9. The method for preparing a nickel-based phosphide according to claim 1, wherein:
in the (step 5),
a pyrolysis byproducts and a second metal in the composition containing the nickel-based phosphide are removed.

10. The method for preparing a nickel-based phosphide according to claim 1, wherein:
the water in the (step 1) to (step 2) or (step 4) is deionized water

11. A nickel-based phosphide represented by the following Chemical Formula 1 and having a BET surface area of 10 m²/g or more:
[Chemical Formula 1] NiMₓP_{y}
wherein x is 0.01 to 0.15, y is 0.5 to 1.2, and
M is one or more selected from the group consisting of Fe, Mo, Co, Mn, Cu, Zn, Cr, and V.

12. An alkaline water electrolysis system comprising the nickel-based phosphide according to claim 11 as an anode catalyst.
